# EUROPÄISCHE PATENTSCHRIFT

(11) **EP 1 175 274 B1**
(45) Veröffentlichungstag und Bekanntmachung des Hinweises auf die Patenterteilung: **02.04.2003**
(21) Anmeldenummer: 00934924.2
(22) Anmeldetag: 20.04.2000
(51) Int. Cl.: B23H 7/10

(54) **DRAHTERODIERVORRICHTUNG**
WIRE EROSION DEVICE
DISPOSITIF D'ELECTRO-EROSION PAR FIL

(30) Priorität: 30.04.1999 DE 19919862
(43) Veröffentlichungstag der Anmeldung: 30.01.2002
(73) Patentinhaber: Walter Klink GmbH & Co. KG, 70736 Fellbach (DE)
(72) Erfinder: KLINK, Walter, D-70736 Fellbach (DE)
(74) Vertreter: Patentanwalts-Partnerschaft, Rotermund + Pfusch + Bernhard
(86) Internationale Anmeldenummer: DE0001283
(87) Internationale Veröffentlichungsnummer: WO00066311

(56) Entgegenhaltungen:
- DE-U- 29 717 373

## Beschreibung

Die Erfindung betrifft eine Vorrichtung zum Werkstoffabtrag bei einem Werkstück durch Funkenerosion mit einem Draht als Elektrode (Drahterodiervorrichtung), mit. den Merkmalen des Oberbegriffes des Anspruches 1.

Eine derartige Drahterodiervorrichtung ist beispielsweise aus der DE-U-297 17 373 bekannt und weist Antriebsmittel auf, die beim Bearbeiten des Werkstücks eine Zugspannung in den Draht einleiten. Diese Antriebsmittel weisen Strömungserzeugungsmittel auf, die bezüglich einer Drahttransportrichtung nach dem Arbeitsbericht eine Fluidströmung erzeugen, die den Draht koaxial umschließt und die in einer Transportrichtung strömt und damit eine Zugspannung in den Draht einleitet. Die Strömungserzeugungsmittel dienen hierbei zum Einfädeln und zum Umlenken des Drahtes. Zur Erzeugung einer Zugspannung, die ausreicht, den Draht von einer Rolle oder Spule abzuziehen, geradlinig gespannt durch einen Arbeitsbereich, in dem das Werkstück angeordnet ist, hindurchzuziehen und einer Drahtaufnahmeeinrichtung zuzuführen, weisen die Antriebsmittel der bekannten Vorrichtung ein Zugwalzenpaar auf, das am Draht angreift und zieht.

Bei herkömmlichen Drahterodiervorrichtungen, die mit Drähten arbeiten, deren Querschnitt 0,1 mm bis 0,3 mm aufweist, werden die genannten Antriebsmittel durch ein Walzen- oder Rollenpaar gebildet, zwischen denen der Draht eingeklemmt ist.

Durch Drehbewegungen dieser Rollen oder Walzen wird am Draht gezogen und der Drahttransport bewirkt.

Ein wesentlicher Vorteil dieser Antriebstechnik ist darin zu sehen, daß der Draht von einer Spule abgewickelt werden kann, so daß dieser permanent erneuert wird und eine quasi unendliche Länge aufweist. Dies hat zur Folge, daß der Erodiervorgang nur sehr selten unterbrochen werden muß, z.B. zum Wechseln einer Spule oder bei einem Drahtabriß. Eine mit einem solchen Antrieb ausgestattete Drahterodiervorrichtung kann somit vollautomatisch betrieben werden.

Ein derartiger vorteilhafter Antrieb mit am Draht mechanisch angreifenden Walzen oder Rollen ist jedoch bei Drähten mit einem Drahtquerschnitt kleiner als 50 µm nicht möglich, da diese Drähte spröd und insbesondere nach dem Erodiervorgang besonders brüchig sind. Die Verwendung von in herkömmlicher Weise mechanisch am Draht angreifenden Walzen oder Rollen würde ständig zu einem Brechen des Drahtes führen und einen ordnungsgemäßen Erodierbetrieb unmöglich machen. Außerdem lagert sich das durch die Funkenerosion vom Werkstück abgetragene Material, der sogenannte "Erodierabbrand", an Führungselementen und an den Antriebsrollen oder Antriebswalzen ab. Diese Verunreinigungen können am Draht Spannungsspitzen erzeugen, die einen dünnen Draht brechen lassen. Um die Qualität des Erodierprozesses gewährleisten zu können, sind daher häufig aufwendige und sorgfältige Reinigungsarbeiten durchzuführen.

Bei Drahterodiervorrichtungen, die mit Drähten arbeiten, deren Drahtquerschnitt kleiner.als 50 µm ist, wird daher ein anderes Antriebsprinzip angewandt. Vom Draht wird ein Stück mit vorbestimmter Länge abgeschnitten und mit einem Ende am Außenumfang einer Kreisscheibe befestigt. Am anderen Ende des Drahtes wird ein Gewicht angebracht. Die Kreisscheibe wird um ihren Mittelpunkt drehend angetrieben, wobei die Kreisscheibe jedoch keine vollständige Umdrehung durchführt, sondern vorher gestoppt und in entgegengesetzter Richtung angetrieben wird. Auch in dieser Drehrichtung führt die Kreisscheibe keine vollständige Umdrehung durch, sondern wird zuvor wieder gestoppt und erneut wieder in entgegengesetzter Drehrichtung angetrieben. Auf diese Weise wird der Draht bidirektional angetrieben, wobei das Gewicht eine jojoartige Bewegung durchführt. Für diesen Antrieb ist die Bezeichnung "Jojo-Antrieb" geläufig.

Ein derartiger Antrieb ist mit einem hohen Aufwand verbunden, da einerseits bei jeder Änderung der Bewegungsrichtung die Stromzufuhr für die Funkenerosion unterbrochen werden muß, um beim Stillstand des Drahtes ein Durchschmelzen des Drahtes oder ein Festschweißen am Werkstück zu verhindern. Außerdem nutzt sich das Drahtstück durch die Funkenerosion ab und muß regelmäßig durch ein neues Drahtstück ersetzt werden, was derzeit nur manuell möglich ist. Dabei gestaltet sich vor allem das Einfädeln eines derartigen Drahtes als besonders schwierig, da Drähte mit einem Querschnitt von kleiner als 50 µm nur mit größter Sorgfalt von Hand manipulierbar sind. Ein vollautomatischer Betrieb einer solchen Drahterodiervorrichtung mit Jojo-Antrieb ist daher nicht möglich.

Das Interesse, mit Mikrodrähten, das sind Drähte mit einem Drahtquerschnitt kleiner als 50 µm, insbesondere aus einem Bereich zwischen 40 und 10 µm, zu arbeiten, ist jedoch groß, da mit einer derartigen Mikrodrahterodiertechnik hochpräzise und ultrakleine Bauelemente hergestellt werden können. Einsatzgebiete für derartige hochpräzise Drahterodiertechniken, sind insbesondere die Medizintechnik, die Mikrosensortechnik, die Mikroelektronik, Fluidtechnik und Mikrooptik.

Die vorliegende Erfindung beschäftigt sich mit dem Problem, eine Drahterodiervorrichtung der eingangs genannten Art so auszugestalten, daß sie auch mit einem Draht, dessen Querschnitt kleiner als 50 µm ist, betrieben werden kann.

Dieses Problem wird erfindungsgemäß durch eine Vorrichtung mit den Merkmalen des Anspruches 1 gelöst.

Die Erfindung beruht auf dem allgemeinen Gedanken, den Antrieb des Drahtes mittels einer Fluidströmung, die den Draht mit sich schleppt, zu bewirken, wobei zusätzliche, mechanisch am Draht angreifende Antriebsmittel entfallen können. Auf diese Weise ist es möglich die extrem dünnen, brüchigen Drähte anzutreiben, ohne einen Abriß oder Bruch zu bewirken. Darüber hinaus ist der Draht bei einem derartigen Antrieb quasi schwimmend gelagert bzw. geführt, so daß sich in dieser Fluidführung kein Erodierabbrand ablagern kann und aufwendige Reinigungsmaßnahmen entfallen können. Die Erfindung nutzt die Erkenntnis, daß insbesondere bei Drahtquerschnitten kleiner als 50 µm die Mitnahmewirkung einer in Längsrichtung des Drahtes strömenden, den Draht umhüllenden Fluidströmung ausreicht, die für die Durchführung einer Drahterosion erforderliche Zugspannung in den Draht einzuleiten, wobei diese Krafteinleitung entlang einer relativ langen Längserstreckung des Drahtes erfolgt, so daß die Zugkraft über die Länge des Drahtes relativ sanft zunimmt, mit der Folge, daß Kraftspitzen im Bereich der Krafteinleitung wirksam vermieden werden. Die Schleppwirkung der Fluidströmung ergibt sich aus einer Reibungskopplung, insbesondere Adhäsionskopplung, zwischen dem Draht und dem diesen umströmenden Fluid.

Entsprechend einer besonders vorteilhaften Ausführungsform der erfindungsgemäßen Vorrichtung kann eine Einfädeleinrichtung vorgesehen sein, die einen gerichteten laminaren Fluidstrahl erzeugt, der den Arbeitsbereich durchdringt und in eine Fangöffnung von den Drahttransport bewirkenden Strömungserzeugungsmitteln eintritt, wobei der Draht stromauf des Strahles in die Einfädeleinrichtung eingebracht wird, vom Strahl koaxial umschlossen und von diesem mitgeschleppt wird und durch die Fangöffnung zu den Strömungserzeugungsmitteln gelangt. Nach einem Bruch des Drahtes oder nach einem Wechseln der Drahtspule kann der manuell oder automatisch in die Einfädeleinrichtung eingebrachte Draht automatisch durch den Arbeitsbereich hindurch den Strömungserzeugungsmitteln zugeführt werden, so daß diese den weiteren Transport des Drahtes bewirken und die für einen ordnungsgemäßen Betrieb der Erodiervorrichtung erforderliche Zugkraft in den Draht einleiten können. Die dadurch erreichbare Vereinfachung bei Drähten mit extrem kleinem Querschnitt liegt auf der Hand. Von besonderem Vorteil ist eine derartige Einfädeleinrichtung oder Einfädelhilfe dann, wenn die Drahterosion nicht an einer Werkstückseite sondern in einer Bohrung oder Durchgangsöffnung des Werkstückes beginnen soll. Die Einfädeleinrichtung ermöglicht dabei gleichzeitig das Einfädeln des Drahtes durch die genannte Durchgangsöffnung, sofern der Öffnungsquerschnitt ausreichend groß ist, insbesondere größer als der Querschnitt des Fluidstrahles ist.

Entsprechend einer zweckmäßigen Weiterbildung dient die genannte Einfädeleinrichtung beim Bearbeiten des Werkstückes zur Zuführung eines flüssigen Dielektrikums. Auf diese Weise erhalt die Einfädeleinrichtung eine Doppelfunktion, wodurch sicn der Gesamtaufwand zur Ausbildung der erfindungsgemäßen Drahterodiervorrichtung reduziert.

Weitere wichtige Merkmale und Vorteile der Erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine vereinfachte Prinzipdarstellung in einer Seitenansicht auf eine Drahterodiervorrichtung nach der Erfindung und
- Fig. 2: eine vergrößerte Ansicht auf ein in Fig. 1 mit II gekennzeichnetes Detail.

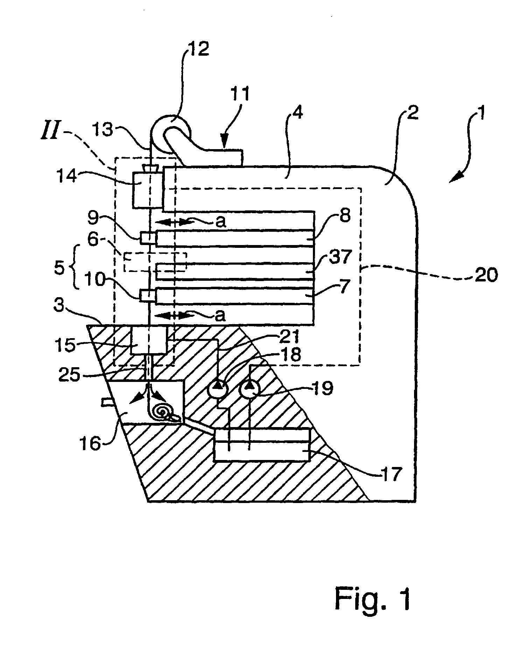

Entsprechend Fig. 1 weist eine erfindungsgemäße Drahterodiervorrichtung 1 ein U-förmiges Gehäuse 2 mit einem Arbeitstisch 3 und mit einem über diesem Arbeitstisch 3 auskragenden Kragarm 4 auf. Zwischen Kragarm 4 und Arbeitstisch 3 ist ein mit einer geschweiften Klammer gekennzeichneter Arbeitsbereich 5 ausgebildet, in dem ein Werkstück 6 durch Drahterosion bearbeitbar ist. Das Werkstück 6 ist zu diesem Zweck an einem Werkstückträger 37 fixiert. Oberhalb des Arbeitsbereiches 5 ist ein oberer Führungsarm 8 angeordnet, der zwischen dem Kragarm 4 und dem Arbeitstisch 3 vom Gehäuse 2 absteht und an seinem freien Ende ein oberes Drahtführungselement 9 trägt. In entsprechender Weise ist unterhalb des Arbeitsbereiches 5 ein unterer Führungsarm 7 angeordnet, der sich zwischen Arbeitstisch 3 und Kragarm 4 erstreckt und an seinem freien Ende ein unteres Drahtführungselement 10 trägt. Die beiden Führungsarme 8 und 9 sind mittels nicht dargestellten Stellglieder entsprechend den Doppelpfeilen a bidirektional bezüglich ihrer Längsrichtung verstellbar.

Am Kragarm 4 ist eine Drahtabgabeeinrichtung 11 angebracht, die hier durch eine am Kragarm 4 gelagerte Spule oder Rolle 12 gebildet ist, auf der ein Vorrat an Draht 13 aufgewickelt ist. Der Draht 13 durchdringt im wesentlichen vertikal von oben nach unten, ausgehend von der Spule 12 zunächst eine Einfädeleinrichtung 14, die z.B. am freien Ende des Kragarmes 4 angebracht ist. Nach der Einfädeleinrichtung 14 gleitet der Draht 13 am oberen Drahtführungselement 9 geführt ab und durchdringt geradlinig gespannt im Arbeitsbereich 5 das Werkstück 6. Nach dem Arbeitsbereich 5 gleitet der Draht 13 am unteren Drahtführungselement 10 geführt entlang und tritt in eine z.B. im Arbeitstisch 3 befestigte Antriebseinrichtung 15 ein, die in den Draht 13 eine Zugspannung einleitet, die ausreicht, den Draht 13 von der Spule 12 abzuziehen und geradlinig gespannt durch den Arbeitsbereich 5 hindurchzuziehen. Nach der Antriebseinrichtung 15 tritt der gebrauchte Draht 13 in eine als Sammelbehälter ausgebildete Drahtaufnahmeeinrichtung 16 ein, von wo aus er durch Recycling wieder in den Werk- und Wertstoffkreis zurückgebracht werden kann.

Die Antriebseinrichtung 15 arbeitet mittels einer Fluidströmung, die hier durch eine Flüssigkeitsströmung gebildet wird. Die dazu benötigte Flüssigkeit wird aus einem Flüssigkeitsreservoir 17 mittels einer ersten Pumpe 18 der Antriebseinrichtung 15 zugeführt. Die Flüssigkeitszufuhr erfolgt dabei über eine Zuführungsleitung 21, welche die Druckseite der Pumpe 18 mit der Antriebseinrichtung 15 verbindet. Die Flüssigkeit tritt nach dem Drahttransport bzw. Drahtantrieb zusammen mit dem Draht 13 in den Sammelbehälter 16 ein und kann von diesem aus wieder in das Reservoir 17 zurückfließen.

Auch die Einfädeleinrichtung 14 arbeitet mit einer Fluidströmung, insbesondere mit einer Flüssigkeitsströmung. Zu diesem Zweck ist eine zweite Pumpe 19 vorgesehen, die saugseitig ebenfalls mit dem Reservoir 17 kommuniziert und druckseitig über eine Zuführungsleitung 20 an die Einfädeleinrichtung 14 angeschlossen ist.

Anstelle zweier separater Pumpen 18 und 19 kann auch eine gemeinsame Pumpe vorgesehen werden, wobei dann eine entsprechende Ventilanordnung zur Regelung der Fluidströme vorgesehen ist.

Bei der in Fig. 1 dargestellten Ausführungsform kann die Einfädeleinrichtung 14 gleichzeitig als Zuführung für ein Dielektrikum verwendet werden, daß zur Durchführung des Erosionsprozesses erforderlich ist. Bei einer bevorzugten Ausführungsform wird ein flüssiges Dielektrikum verwendet, das außerdem zum Einfädeln und zum Antrieb des Drahtes 13 verwendet wird. Durch diese Maßnahme vereinfacht sich der Aufbau einer solchen Drahterodiervorrichtung. Als Dielektrikum eignet sich auch Wasser.

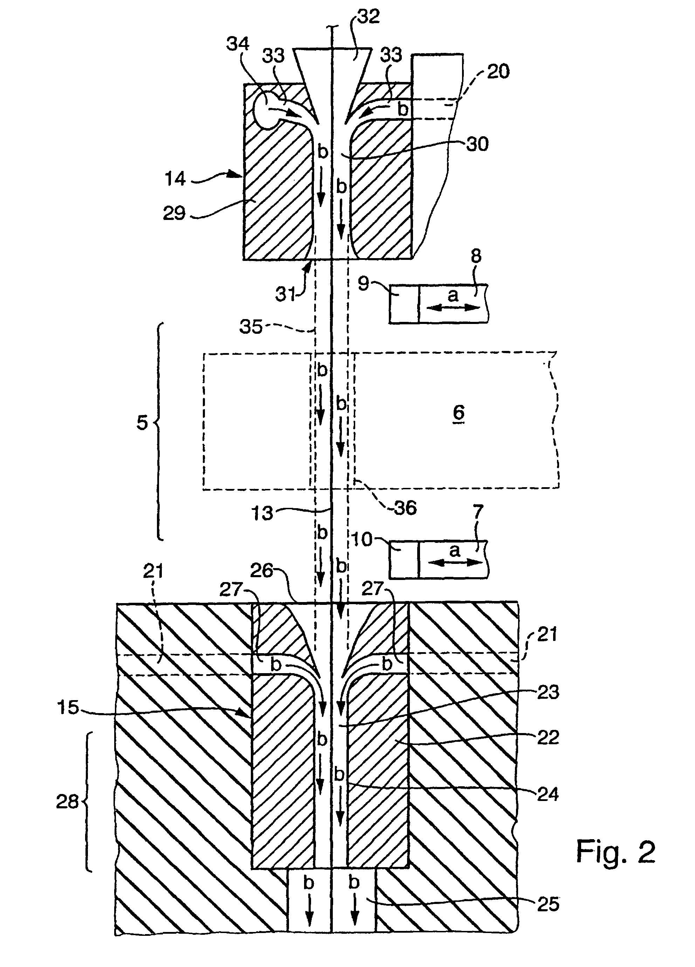

Entsprechend Fig. 2 weist die Antriebseinrichtung 15 eine Antriebseinheit 22 auf, die eine Kammer 23 enthält. Diese Kammer 23 geht in einen vertikal ausgerichteten Strömungskanal 24 über, der in einen mit dem Sammelbehälter 16 kommunizierende Abflußkanal 25 mündet (vgl. Fig. 1). Auf der vom Strömungskanal 24 abgewandten Seite weist die Kammer 23 eine Drahteinführöffnung 26 auf, die koaxial zum Strömungskanal 24 ausgerichtet ist. Diese Drahteinführöffnung 26 verjüngt sich trichterförmig bis zu ihrem Eintritt in die Kammer 23. Der Draht 13 durchdringt die Antriebseinheit 22 in vertikaler Richtung, wobei er konzentrisch zur Antriebseinheit 22 und koaxial zur Drahteinführöffnung 26, zur Kammer 23 und zum Strömungskanal 24 ausgerichtet ist. Außerdem weist die Kammer wenigstens zwei Fluideinlaßöffnungen 27 auf, durch welche die durch die Pumpe 18 und die Zuführungsleitung 21 zur Antriebseinrichtung 15 transportierte Flüssigkeit in die Kammer 23 eingebracht wird. Die radial zugeführte Flüssigkeit wird dabei vertikal nach unten umgelenkt und in den Strömungskanal 24 eingeleitet. Die Flüssigkeitsströmung wird in Fig. 2 durch Pfeile b symbolisch dargestellt.

Die in der Kammer 23 ausgebildete, nach unten gerichtete Strömung erzeugt an der Drahteinführöffnung 26 eine Sogwirkung, durch die sich in diesem Bereich sammelnde Flüssigkeit in die Kammer 23 angesaugt wird.

Die im Strömungskanal 24 erzeugte Fluidströmung umschließt den Draht 13 koaxial und leitet durch Fluidreibung, insbesondere Flüssigkeitsreibung, eine vertikal nach unten gerichtete Zugspannung in den Draht 13 ein. Im Strömungskanal 24 ist ein mit einer geschweiften Klammer gekennzeichneter Schleppbereich 28 ausgebildet, in dem eine laminare Fluidströmung erzeugt wird, um eine besonders günstige Krafteinleitung in den Draht 13 zu bewirken.

Die Förderleistung der Pumpe 18 bzw. die Menge der zugeführten Flüssigkeit und/oder der darin herrschende Druck sind in Abhängigkeit des Querschnittes des verwendeten Drahtes 13 und/oder in Abhängigkeit der gewünschten bzw. erforderlichen Drahttransportgeschwindigkeit einstellbar. Die hierbei verwendeten Drähte weisen einen Drahtquerschnitt kleiner als 50 µm auf. Vorzugsweise liegen die Drahtquerschnitte in einem Bereich zwischen 40 µm und 10 µm. Ebenso ist die Verwendung eines Drahtes mit einem 8 µm Querschnitt möglich. Dabei ist es von Vorteil, daß die Antriebseinrichtung 15 bzw. die Antriebseinheit 22 austauschbar ausgebildet ist, um für den jeweiligen Draht optimal dimensionierte und konfigurierte Strömungsbedingungen in der Kammer 23 und im Strömungskanal 2 zu erzeugen.

Die Einfädeleinrichtung 14 weist ähnlich wie die Antriebseinrichtung 15 eine Einfädeleinheit 29 auf, die eine Kammer 30 enthält. Die Kammer 30 weist eine Mündung 31 auf, die hier als Düse, insbesondere als Lavaldüse ausgebildet ist und zum Arbeitsbereich 5 hin offen ist. Die Kammer 30 weist außerdem eine Drahteinführöffnung 32 auf, die koaxial zur Düse 31 ausgerichtet ist. Die Drahteinführöffnung 32 ist auch hier trichterförmig ausgestaltet und verjüngt sich zur Kammer 30 hin. Außerdem weist die Kammer 30 mehrere Fluideinlaßöffnung 33 auf, über die die Flüssigkeit in die Kammer 30 eindringen kann. Die Flüssigkeitszufuhr erfolgt dabei mittels der Pumpe 19 und der Zuführungsleitung 20. In der Einfädeleinheit 29 ist zur Verteilung der zugeführten Flüssigkeit an die einzelnen Fluideinlaßöffnungen 33 ein Ringkanal 34 ausgebildet.

Zum Einfädeln des Drahtes 13 wird dieser zunächst in die Drahteinführöffnung 32 eingeführt, und in die Einfädeleinheit 29 eingeschoben. Bei aktivierter Einfädeleinrichtung 14 erzeugt diese einen laminaren Fluidstrahl 35, dessen Mantelfläche oder Außenseite in Fig. 2 mit unterbrochenen Linien dargestellt ist. Dieser Fluidstrahl 35 durchdringt dabei vertikal den Arbeitsbereich 5 und tritt in die als Fangöffnung dienende Drahteinführöffnung 26 der Antriebseinrichtung 15 ein. Der Strahlquerschnitt und somit auch der Querschnitt der Mündung 31 sind kleiner als der Querschnitt der Drahteinführöffnung 26 der Antriebseinheit 22.

Die in der Kammer 30 herrschenden Strömungsverhältnisse bewirken an der Drahteinführöffnung 32 der Einfädeleinrichtung 14 einen Sog, durch den der Draht 13 nach unten transportiert wird. Durch den Fluidstrahl 35, der den Draht 13 koaxial umgibt, wird der Draht 13 im Inneren des Fluidstrahles 35 geführt und in die Drahteinführöffnung 26 der Antriebseinrichtung 15 eingebracht. Dabei wird gleichzeitig bewirkt, daß der Draht 13 gegebenenfalls durch eine im Werkstück 6 ausgebildete Startöffnung 36 hindurchgeführt wird, die für einen nachfolgenden Erodierprozeß den Ausgangspunkt bildet. Sobald der Draht 13 durch den Fluidstrahl 35 in die Drahteinführöffnung 26 der Antriebseinrichtung 15 eingeführt ist, bewirkt die in der Antriebseinheit 22 ausgebildete Fluidströmung den Weitertransport des Drahtes 13, wobei dieser dann die erforderliche Zugspannung erhält. Während des Einfadelvorganges werden die Drahtführungselemente 9 und 10 bzw. die Führungsarme 7 und 8 vom Strömungsweg des Strahles 35 entfernt, um den Strahl 35 nicht zu beeinträchtigen. Nach einem erfolgreichen Einfädelvorgang werden die Drahtführungselemente 9 und 10 an den Draht 13 heranverstellt, um die erforderliche Führung auszubilden.

Zum Einfadeln arbeitet die Einfädeleinrichtung 14 mit einem Flüssigkeitsdruck von etwa 8 bar. Beim Erodierbetrieb wird die Einfädeleinrichtung 14 zur Zugabe von Dielektrikum verwendet, wobei eine Dielektrikumszuführung bei etwa 1 bar durchgeführt werden kann. Das Dielektrikum umströmt dabei in vorteilhafter Weise den Draht 13.

Beim Zugbetrieb der Antriebseinrichtung 15 wird vorzugsweise mit einem Flüssigkeitsdruck von 1 bis 8 bar gearbeitet, der im wesentlichen vom Querschnitt des verwendeten Drahtes 13 abhängt.

Auch die Einfädeleinrichtung 14 bzw. deren Einfädeleinheit 29 ist vorzugsweise austauschbar ausgebildet, um die Einfädeleinrichtung 14 an die jeweils verwendete Drahtstärke anzupassen.

Die Sogwirkung an der Drahteinführöffnung 26, der Antriebseinrichtung 15 bewirkt dabei, daß der Fluidstrahl 35 beim Einfädeln und das abfließende Dielektrikum beim Erodierbetrieb rückstandsfrei durch die Kammer 23 wegbefördert werden kann.

Entsprechend einer vorteilhaften Weiterbildung kann die Drahtabgabeeinrichtung 11, das heißt hier die Spule 12 mit einer Vorschubeinrichtung ausgestattet sein, die beispielsweise durch eine Bremse oder durch einen Antrieb gebildet sein kann. Die Bremse und dieser Antrieb werden dabei so betätigt, daß sich für den Draht 13 eine vorbestimmte Transportgeschwindigkeit ausbildet. Durch die Antriebseinrichtung 15 wird dabei die Zugspannung in den Draht 13 eingeleitet, die für einen gespannten Verlauf des Drahtes 13 im Arbeitsbereich 5 erforderlich ist. Die genannten Vorschubmittel wirken somit nicht als Antrieb, sondern bewirken bei der Drahtabgabeeinrichtung 11, daß diese stets nur soviel Draht abgibt, daß die erforderliche Transportgeschwindigkeit sowie die erforderliche Zugspannung erreicht werden können.

Um die durch die Antriebseinrichtung 15 in den Draht 13 eingeleitete Zugspannung zu regulieren, kann in der Flüssigkeitszuführungsleitung 21 eine Drossel oder dergleichen angeordnet sein, die es ermöglicht, den Flüssigkeitsdruck zum Antrieb des Drahtes 13 insbesondere manuell einzustellen.

## Patentansprüche

1. Vorrichtung zum Werkstoffabtrag bei einem Werkstück (6) durch Funkenerosion mit einem Draht (13) als Elektrode, wobei Antriebsmittel (15) vorgesehen sind, die beim Bearbeiten des Werkstückes (6) eine Zugspannung in den Draht (13) einleiten, wobei die Antriebsmittel Strömungserzeugungsmittel (15,18) aufweisen, die bezüglich einer Drahttransportrichtung nach dem Arbeitsbereich (5) eine Fluidströmung erzeugen, die den Draht (13) koaxial umschließt und die in der Transportrichtung strömt und damit eine Zugspannung in den Draht (13) einleitet,
**dadurch gekennzeichnet,**
**daß** die Strömungserzeugungsmittel (15,18) so ausgebildet sind, daß die von der Fluidströmung erzeugte Zugspannung ausreicht, den Draht (13) von einer Drahtabgabeeinrichtung (11), z.B. Rolle, Spule (12), abzuziehen, geradlinig gespannt durch einen Arbeitsbereich (5), in dem das Werkstück (6) angeordnet ist, hindurchzuziehen und einer Drahtaufnahmeeinrichtung (16), z.B. Sammelbehälter, zuzuführen.

2. Drahterodiervorrichtung nach Anspruch 1,
**dadurch gekennzeichnet,**
**daß** die Strömungserzeugungsmittel (15, 18) eine Antriebseinheit (22) mit einer Kammer (23) aufweisen, die in einen Strömungskanal (24) übergeht, und daß die Kammer (23) mindestens eine Fluideinlaßöffnung (27) und eine koaxial zum Strömungskanal (24) ausgerichtete Drahteinführöffnung (26) aufweist, wobei die Kammer (23) so ausgebildet ist, daß das eingeleitete Fluid an der Drahteinführöffnung (26) eine Saugwirkung erzeugt und durch den Strömungskanal (24) abfließt.

3. Drahterodiervorrichtung nach Anspruch 1 oder 2,
**dadurch gekennzeichnet,**
**daß** die Fluidströmung hinsichtlich Druck und/oder Menge und/oder Geschwindigkeit in Abhängigkeit des verwendeten Drahtquerschnittes und/oder der gewünschten Drahttransportgeschwindigkeit einstellbar ist.

4. Drahterodiervorrichtung nach einem der Ansprüche 1 bis 3,
**dadurch gekennzeichnet,**
**daß** die Strömungserzeugungsmittel (15, 18) einen Schleppbereich (28) ausbilden, in dem zur Zugspannungs- oder Zugkrafteinleitung in den Draht (13) eine laminare Fluidströmung herrscht.

5. Drahterodiervorrichtung nach Anspruch 4 und einem der Ansprüche 2 oder 3,
**dadurch gekennzeichnet,**
**daß** der Schleppbereich (28) im Strömungskanal (24) ausgebildet ist.

6. Drahterodiervorrichtung nach einem der Ansprüche 1 bis 5,
**dadurch gekennzeichnet,**
**daß** eine Einfädeleinrichtung (14) vorgesehen ist, die einen gerichteten laminaren Fluidstrahl (35) erzeugt, der den Arbeitsbereich (5) durchdringt und in eine Fangöffnung (26) der Strömungserzeugungsmittel (15, 18) eintritt, wobei der Draht (13) stromauf des Strahles (35) in die Einfädeleinrichtung (14) eingebracht wird, vom Strahl (35) koaxial umschlossen und von diesem mitgeschleppt wird und durch die Fangöffnung (26) zu den Strömungserzeugungsmitteln (15, 18) gelangt.

7. Drahterodiervorrichtung nach Anspruch 6,
**dadurch gekennzeichnet,**
**daß** die Einfädeleinrichtung (14) eine Einfädeleinheit (29) mit einer Kammer (30) aufweist, die mittels einer Mündung (31) in den Arbeitsbereich (5) mündet, und daß die Kammer (30) mindestens eine Fluideinlaßöffnung 33 und eine koaxial zur Mündung 31 ausgerichtete Drahteinführöffnung 32 aufweist, wobei die Kammer 30 so ausgebildet ist, daß das eingeleitete Fluid an der Drahteinführöffnung (32) eine Saugwirkung erzeugt und den Fluidstrahl (35) ausbildet.

8. Drahterodiervorrichtung nach Anspruch 7,
**dadurch gekennzeichnet,**
**daß** die Mündung (31) als Düse, insbesondere als Lavaldüse, ausgebildet ist.

9. Drahterodiervorrichtung nach Anspruch 7 oder 8 und einem der Ansprüche 2 bis 5,
**dadurch gekennzeichnet,**
**daß** die Fangöffnung durch die Drahteinführöffnung (26) der Kammer (23) der Antriebseinheit (22) gebildet ist.

10. Drahterodiervorrichtung nach einem der Ansprüche 2 bis 5 und einem der Ansprüche 6 bis 9,
**dadurch gekennzeichnet,**
**daß** die Antriebseinheit (22) und die Einfädeleinheit (29) identisch ausgebildet sind.

11. Drahterodiervorrichtung nach einem der Ansprüche 6 bis 10,
**dadurch gekennzeichnet,**
**daß** die Einfädeleinrichtung (14) beim Bearbeiten des Werkstückes (6) zur Zuführung eines flüssigen Dielektrikums dient.

12. Drahterodiervorrichtung nach Anspruch 11,
**dadurch gekennzeichnet,**
**daß** der Zuführungsdruck bei der Zuführung des Dielektrikums beim Bearbeiten des Werkstückes (6) kleiner ist als der Fluiddruck beim Einfädeln des Drahtes (13).

13. Drahterodiervorrichtung nach einem der vorhergehenden Ansprüche,
**dadurch gekennzeichnet,**
**daß** Die Drahtabgabeeinrichtung (11) mit Drahtvorschubmitteln zusammenwirkt, die bewirken, daß der Draht (13) mit einer vorbestimmten, einstellbaren Transportgeschwindigkeit von der Drahtabgabeeinrichtung (11) abgegeben wird.

14. Drahterodiervorrichtung nach Anspruch 2 bis 13,
**dadurch gekennzeichnet,**
**daß** die Antriebseinheit (22) austauschbar ausgebildet ist, wobei für unterschiedliche Drahtquerschnitte unterschiedliche Antriebseinheiten (22) vorgesehen sind.

15. Drahterodiervorrichtung nach einem der Ansprüche 7 bis 14,
**dadurch gekennzeichnet,**
**daß** die Einfädeleinheit (29) austauschbar ausgebildet ist, wobei für unterschiedliche Drahtquerschnitte unterschiedliche Einfädeleinheiten (29) vorgesehen sind.

16. Drahterodiervorrichtung nach einem der Ansprüche 1 bis 15,
**dadurch gekennzeichnet,**
**daß** das Fluid eine Flüssigkeit ist.

17. Drahterodiervorrichtung nach einem der Ansprüche 1 bis 16,
**dadurch gekennzeichnet,**
**daß** das Fluid ein Dielektrikum ist.

18. Drahterodiervorrichtung nach einem der Ansprüche 1 bis 17,
**dadurch gekennzeichnet,**
**daß** das Fluid Wasser ist.

## Claims

1. A device for removing material from a work piece (6) by means of electrical discharge machining with an electrode in the form of a wire (13), wherein driving means (15) are provided which introduce a tensile stress into the wire (13) during the processing of the work piece (6), wherein the driving means contain flow generating means (15, 18) for generating a fluid flow that coaxially surrounds the wire (13) behind the work area (5) viewed in the wire transport direction, and wherein said fluid flow flows in the transport direction and thusly introduces a tensile stress into the wire (13),
**characterized by** the fact that
the flow generating means (15, 18) are realized in such a way that the tensile stress generated by the fluid flow suffices for unwinding the wire (13) from a wire delivery device (11), e.g., a roll or spool (12), for pulling the wire in a linearly tensioned fashion through a work area (5) in which the work piece (6) is arranged and for transporting the wire to a wire receiving device (16), e.g., a collection container.

2. The wire erosion device according to Claim 1,
**characterized by** the fact that
the flow generating means (15, 18) contain a drive unit (22) with a chamber (23) that transforms into a flow channel (24), and by the fact that the chamber (23) contains at least one fluid inlet opening (27) and a wire intake opening (26) that is aligned coaxial to the flow channel (24), wherein the chamber (23) is realized in such a way that the introduced fluid generates a suction effect on the wire intake opening (26) and drains through the flow channel (24).

3. The wire erosion device according to Claim 1 or 2,
**characterized by** the fact that
the fluid flow can be adjusted with respect to the pressure and/or the quantity and/or the speed in dependence on the wire cross section used and/or the desired wire transport speed.

4. The wire erosion device according to one of Claims 1-3,
**characterized by** the fact that
the flow generating means (15, 18) form a drag zone (28) in which a laminar fluid flow is present in order to introduce a tensile stress or tensile force into the wire (13).

5. The wire erosion device according to Claim 4 and Claim 2 or 3,
**characterized by** the fact that
the drag zone (28) is formed in the flow channel (24).

6. The wire erosion device according to one of Claims 1-5,
**characterized by** the fact that
a threading device (14) is provided which generates a directed laminar fluid jet (35) that penetrates the work area (5) and is introduced into a capture opening (26) of the flow generating means (15, 18), wherein the wire (13) is introduced into the threading device (14) upstream of the jet (35) and coaxially surrounded by the jet (35), and wherein the wire is entrained by said jet and transported to the flow generating means (15, 18) through the capture opening (26).

7. The wire erosion device according to Claim 6,
**characterized by** the fact that
the threading device (14) contains a threading unit (29) with a chamber (30) that ends in the work area (5) in the form of an opening (31), and by the fact that the chamber (30) contains at least one fluid inlet opening (33) and a wire intake opening (32) that is aligned coaxially to the opening (31), wherein the chamber (30) is realized in such a way that the introduced fluid generates a suction effect on the wire intake opening (32) and forms the fluid jet (35).

8. The wire erosion device according to Claim 7,
**characterized by** the fact that
the opening (31) is realized the form of a nozzle, in particular, a Laval nozzle.

9. The wire erosion device according to Claim 7 or 8 and one of Claims 2-5,
**characterized by** the fact that
the capture opening is formed by the wire intake opening (26) of the chamber (23) that forms part of the drive unit (22).

10. The wire erosion device according to one of Claims 2-5 and one of Claims 6-9,
**characterized by** the fact that
the drive unit (22) and the threading unit (29) are realized identically.

11. The wire erosion device according to one of Claims 6-10,
**characterized by** the fact that
the threading device (14) serves for supplying a liquid dielectric during the processing of the work piece (6).

12. The wire erosion device according to Claim 11,
**characterized by** the fact that
the feed pressure during the supply of the dielectric is lower than the fluid pressure during the threading of the wire (13) while the work piece (6) is processed.

13. The wire erosion device according to one of the preceding claims,
**characterized by** the fact that
the wire delivery device (11) cooperates with wire advancing means that cause the wire (13) to be unrolled from the wire delivery device (11) with a predetermined, adjustable transport speed.

14. The wire erosion device according to Claims 2-13,
**characterized by** the fact that
the drive unit (22) can be exchanged, wherein different drive units (22) are provided for different wire cross sections.

15. The wire erosion device according to one of Claims 7-14,
**characterized by** the fact that
the threading unit (29) can be exchanged, wherein different threading units (29) are provided for different wire cross sections.

16. The wire erosion device according to one of Claims 1-15,
**characterized by** the fact that
the fluid consists of a liquid.

17. The wire erosion device according to one of Claims 1-16,
**characterized by** the fact that
the fluid consists of a dielectric.

18. The wire erosion device according to one of Claims 1-17,
**characterized by** the fact that
the fluid consists of water.

## Revendications

1. Dispositif pour l'enlèvement de matière sur une pièce usinée (6) par érosion par étincelage au moyen d'un fil (13) utilisé comme électrode, étant prévus des moyens d'entraînement (15) qui introduisent, lors de l'usinage de la pièce (6), une tension de traction dans le fil (13), les moyens d'entraînement présentant des moyens de création de flux (15, 18), qui créent en aval de la zone de travail (5), relativement à un dispositif de transport de fil, un flux de fluide qui entoure coaxialement le fil (13) et qui s'écoule dans le sens de transport et introduit ainsi une tension de traction dans le fil (13),
**caractérisé en ce que**
les moyens de création de flux (15, 18) sont configurés de manière à ce que la tension de traction créée par le flux de fluide suffise pour extraire le fil (13) d'un dispositif de distribution de fil (11), par exemple un rouleau, une bobine (12), le tirer, tendu en ligne droite, à travers une zone de travail (5) dans laquelle la pièce (6) est disposée et l'acheminer à une installation réceptrice du fil (16), par exemple un récipient collecteur.

2. Dispositif d'électro-érosion par fil selon la revendication 1,
**caractérisé en ce que**
les moyens de création de flux (15, 18) présentent une unité d'entraînement (22) avec une chambre (23) qui aboutit à un canal d'écoulement (24) et que la chambre (23) présente au moins un orifice d'entrée de fluide (27) et un orifice d'introduction de fil (26) aligné coaxialement par rapport au canal d'écoulement (24), la chambre (23) étant configurée de manière à ce que le fluide introduit produise un effet d'aspiration à l'orifice d'entrée du fil (26) et s'écoule à travers le canal d'écoulement (24).

3. Dispositif d'électro-érosion par fil selon la revendication 1 ou 2,
**caractérisé en ce que**
le flux de fluide est réglable au niveau de la pression et/ou de la quantité et/ou de la vitesse en fonction de la section transversale de fil utilisée et/ou de la vitesse de transport souhaitée du fil.

4. Dispositif d'électro-érosion par fil selon une des revendications 1 à 3,
**caractérisé en ce que**
les moyens de création de flux (15, 18) forment une zone de halage (28), dans laquelle règne un flux de fluide laminaire par rapport à l'introduction de force de tension de traction ou de traction dans le fil (13).

5. Dispositif d'électro-érosion par fil selon la revendication 4 et une des revendications 2 ou 3,
**caractérisé en ce que**
la zone de halage (28) est formée dans le canal d'écoulement (24).

6. Dispositif d'électro-érosion par fil selon une des revendications 1 à 5,
**caractérisé en ce que**
il est prévu une installation d'enfilage (14) qui crée un jet de fluide (35) laminaire dirigé, qui traverse la zone de travail (5) et pénètre dans un orifice de prise (26) des moyens de création de flux (15, 18), le fil (13) étant introduit en amont du jet (35) dans l'orifice d'enfilage (14), entouré coaxialement par le jet (35) et entraîné par celui-ci et parvenant à travers l'orifice de prise (26) jusqu'aux moyens de création de flux (15, 18).

7. Dispositif d'électro-érosion par fil selon la revendication 6,
**caractérisé en ce que**
le dispositif d'enfilage (14) présente une unité d'enfilage (29) avec une chambre (30), qui débouche par une embouchure (31) dans la zone de travail (5), et que la chambre (30) présente au moins un orifice d'entrée de fluide (33) et un orifice d'introduction de fil (32) aligné coaxialement par rapport à l'embouchure (31), la chambre (30) étant formée de manière à ce que le fluide introduit produise un effet d'aspiration à l'orifice d'introduction de fil (32) et forme le jet de fluide (35).

8. Dispositif d'électro-érosion par fil selon la revendication 7,
**caractérisé en ce que**
l'embouchure (31) est configurée comme une tuyère, notamment une tuyère convergente-divergente.

9. Dispositif d'électro-érosion par fil selon la revendication 7 ou 8 et une des revendications 2 à 5,
**caractérisé en ce que**
l'ouverture de prise est constituée par l'orifice d'introduction de fil (26) de la chambre (23) de l'unité d'entraînement (22).

10. Dispositif d'électro-érosion par fil selon une des revendications 2 à 5 et une des revendications 6 à 9,
**caractérisé en ce que**
l'unité d'entraînement (22) et l'unité d'enfilage (29) sont de configuration identique.

11. Dispositif d'électro-érosion par fil selon une des revendications 6 à 10,
**caractérisé en ce que**
l'unité d'enfilage (14) sert, lors de l'usinage de la pièce (6), à acheminer un fluide diélectrique liquide.

12. Dispositif d'électro-érosion par fil selon la revendication 11,
**caractérisé en ce que**
la pression d'alimentation, au cours de l'acheminement du diélectrique lors de l'usinage de la pièce (6), est inférieure à la pression de fluide lors de l'enfilage du fil (13).

13. Dispositif d'électro-érosion par fil selon une des revendications précédentes,
**caractérisé en ce que**
l'installation de distribution de fil (11) coopère avec des moyens d'avancée de fil qui ont pour effet que le fil (13) est distribué à une vitesse de transport prédéfinie et réglable à partir du dispositif de distribution de fil (11).

14. Dispositif d'électro-érosion par fil selon les revendications 2 à 13,
**caractérisé en ce que**
l'unité d'entraînement (22) est conçue de manière à être échangeable, différentes unités d'entraînement (22) étant prévues pour différentes sections transversales de fil.

15. Dispositif d'électro-érosion par fil selon une des revendications 7 à 14,
**caractérisé en ce que**
l'unité d'enfilage (29) est conçue de manière à être échangeable, différentes unités d'enfilage (29) étant prévues pour différentes sections transversales de fil.

16. Dispositif d'électro-érosion par fil selon une des revendications 1 à 15,
**caractérisé en ce que**
le fluide est un liquide.

17. Dispositif d'électro-érosion par fil selon une des revendications 1 à 16,
**caractérisé en ce que**
le fluide est un diélectrique.

18. Dispositif d'électro-érosion par fil selon une des revendications 1 à 17,
**caractérisé en ce que**
le fluide est de l'eau.
